# EUROPEAN PATENT SPECIFICATION

(11) **EP 3 809 224 B1**
(45) Date of publication and mention of the grant of the patent: **29.07.2026**
(21) Application number: 20202335.4
(22) Date of filing: 16.10.2020
(51) Int. Cl.: G05B 23/02, F03D 17/00

(54) **SYSTEMS AND METHODS FOR OPTIMIZING SCHEDULING OF HEALTH CHECKS FOR WIND TURBINES DURING PERIODS OF LOW WIND SPEEDS**
SYSTEME UND VERFAHREN ZUR OPTIMIERUNG DER PLANUNG VON GESUNDHEITSPRÜFUNGEN FÜR WINDTURBINEN WÄHREND ZEITRÄUMEN MIT GERINGEN WINDGESCHWINDIGKEITEN
SYSTÈMES ET PROCÉDÉS D'OPTIMISATION DE PROGRAMMATION DE CONTRÔLES DE SANTÉ POUR ÉOLIENNES PENDANT LES PÉRIODES DE VENTS FAIBLES

(30) Priority: 18.10.2019 IN 201921042374
(43) Date of publication of application: 21.04.2021
(73) Proprietor: General Electric Renovables España, S.L., 08005 Barcelona (ES)
(72) Inventor: Mazumdar, Abhijeet, 560066 Bangalore (IN); Appuraj, Karthikeyan, 560066 Bangalore (IN); Bertrand, Sebastien David, Greenville, SC 29615 (US)
(74) Representative: Zimmermann & Partner Patentanwälte mbB

(56) References cited:
- EP-A1- 3 343 300
- EP-A2- 3 252 556
- WO-A1-2013/142467
- WO-A1-2017/205221
- WO-A2-2018/113864
- ES-A1- 2 401 880

## Description

### FIELD

The present disclosure relates generally to wind turbines, and more particularly, to systems and methods for optimizing scheduling of technical standby tests/health checks such that the tests occur during periods of low wind speeds so as to minimize energy loss.

### BACKGROUND

Wind power is considered one of the cleanest, most environmentally friendly energy sources presently available, and wind turbines have gained increased attention in this regard. A modern wind turbine typically includes a tower, generator, gearbox, nacelle, and one or more rotor blades. The rotor blades capture kinetic energy of wind using known airfoil principles. For example, rotor blades typically have the cross-sectional profile of an airfoil such that, during operation, air flows over the blade producing a pressure difference between the sides. Consequently, a lift force, which is directed from a pressure side towards a suction side, acts on the blade. The lift force generates torque on the main rotor shaft, which is geared to a generator for producing electricity. In addition, a plurality of the wind turbines may be arranged in a predetermined geological location and electrically connected together to form a wind farm.

During operation, wind impacts the rotor blades of the wind turbine and the blades transform wind energy into a mechanical rotational torque that rotatably drives a low-speed shaft. The low-speed shaft is configured to drive the gearbox that subsequently steps up the low rotational speed of the low-speed shaft to drive a high-speed shaft at an increased rotational speed. The high-speed shaft is generally rotatably coupled to a generator so as to rotatably drive a generator rotor. As such, a rotating magnetic field may be induced by the generator rotor and a voltage may be induced within a generator stator that is magnetically coupled to the generator rotor. In certain configurations, the associated electrical power can be transmitted to a turbine transformer that is typically connected to a power grid via a grid breaker. Thus, the turbine transformer steps up the voltage amplitude of the electrical power such that the transformed electrical power may be further transmitted to the power grid.

In many wind turbines, the generator rotor may be electrically coupled to a bi-directional power converter that includes a rotor side converter joined to a line side converter via a regulated DC link. More specifically, some wind turbines, such as wind-driven doubly-fed induction generator (DFIG) systems or full power conversion systems, may include a power converter with an AC-DC-AC topology.

Current wind turbine maintenance strategies include various technical standby tests or health checks (e.g. as recommended by the International Electrotechnical Commission, IEC) which are executed during specific periods of time in order to ensure safe operation of wind turbine. For example, for certain wind turbines, technical standby (TS) tests/checks are conducted periodically and/or conditionally to check the health of the wind turbine subsystems by stopping the wind turbine. As such, each test is scheduled to run after a specific period of time has passed from the last successful time the test was executed.

Although each test may vary between about 8 and 45 minutes in duration, the cumulative downtime due to each test in a year can be significant. Thus, such tests impact the availability of the wind turbine for the customers. In addition, since these tests are conducted as a function of time, there is high probability of higher annual energy production (AEP) loss due to the tests being conducted during higher wind speed conditions. In addition to negatively impacting AEP, current processes for scheduling of the tests increase the effort of tracking the time passed for each test per wind turbine and then re-scheduling the test.

In view of the foregoing, it would be advantageous to optimize scheduling of the health checks such that the checks occur during the lowest wind period possible so as to minimize AEP loss.

EP 3 343 300 A1 describes a digital twin interface for managing a wind farm having a plurality of wind turbines. EP 3 252 556 A2 discloses a wind farm supervision monitoring system.

WO2017/205221 describes another method for improving power production of a wind turbine.

### BRIEF DESCRIPTION

Aspects and advantages of the invention will be set forth in part in the following description.

In one aspect, a method according to the invention is defined by the wording of claim 1. An apparatus according to the invention is defined according to the wording of claim 9.

The dependent claims define further advantageous embodiments.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a schematic diagram of one embodiment of a wind turbine system according to the present disclosure;
FIG. 2 illustrates a schematic diagram of one embodiment of a wind farm having a plurality of wind turbines according to the present disclosure;
FIG. 3 illustrates a schematic diagram of another embodiment of a wind turbine system according to the present disclosure;
FIG. 4 illustrates a schematic diagram of another embodiment of a wind farm having a plurality of wind turbines according to the present disclosure;
FIG. 5 illustrates a schematic diagram of one embodiment of a controller of a wind turbine according to the present disclosure;
FIG. 6 illustrates a flow diagram of one embodiment of a method for improving power production of a wind turbine according to the present disclosure;
FIG. 7 illustrates a flow diagram of another embodiment of a method for improving power production of a wind turbine according to the present disclosure.

### DETAILED DESCRIPTION

Reference now will be made in detail to embodiments of the invention, one or more examples of which are illustrated in the drawings. Each example is provided by way of explanation of the invention, not limitation of the invention.

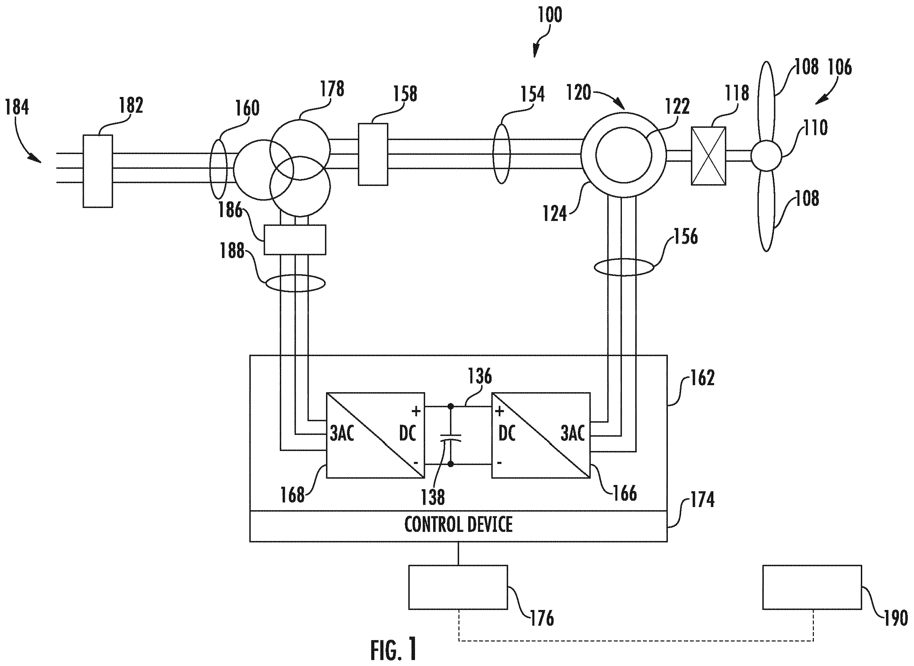

Referring now to the drawings, FIG. 1 illustrates one embodiment of a wind turbine system 100 according to the present disclosure. Example aspects of the present disclosure are discussed with reference to the wind turbine system 100 of FIG. 1 for purposes of illustration and discussion. Those of ordinary skill in the art, using the disclosures provided herein, should understand that example aspects of the present disclosure are also applicable in other power systems, such as synchronous, asynchronous, permanent magnet, and full-power conversion wind turbines, solar, gas turbine, or other suitable power generation systems.

In the example system 100, a rotor 106 includes a plurality of rotor blades 108 coupled to a rotating hub 110. The rotor 106 is coupled to an optional gearbox 118, which is, in turn, coupled to a generator 120. In accordance with aspects of the present disclosure, the generator 120 may be a doubly fed induction generator (DFIG) 120. Accordingly, the DFIG 120 can include a rotor and a stator. Further, as shown, the DFIG 120 is typically coupled to a stator bus 154 and a power converter 162 via a rotor bus 156. The stator bus 154 provides an output multiphase power (e.g. three-phase power) from a stator of the DFIG 120 and the rotor bus 156 provides an output multiphase power (e.g. three-phase power) of a rotor of the DFIG 120. Referring to the power converter 162, the DFIG 120 is coupled via the rotor bus 156 to a rotor side converter 166. The rotor side converter 166 is coupled to a line side converter 168 which in turn is coupled to a line side bus 188.

In example configurations, the rotor side converter 166 and the line side converter 168 are configured for normal operating mode in a three-phase, pulse width modulation (PWM) arrangement using insulated gate bipolar transistor (IGBT) or similar switching elements. The rotor side converter 166 and the line side converter 168 can be coupled via a DC link 136 across which is the DC link capacitor 138. In an embodiment, a transformer 178, such as a three-winding transformer, can be coupled to the line bus 188, the stator bus 154, and a system bus 160. The transformer 178 can convert the voltage of power from the line bus 188 and the stator bus 154 to a voltage suitable for providing to an electrical grid 184 via system bus 160.

The power conversion system 162 can be coupled to a control device 174 to control the operation of the rotor side converter 166 and the line side converter 168. It should be noted that the control device 174, in typical embodiments, is configured as an interface between the power conversion system 162 and a turbine control system 176. In one implementation, the control device 174 can include a processing device (e.g. microprocessor, microcontroller, etc.) executing computer-readable instructions stored in a computer-readable medium. The instructions when executed by the processing device can cause the processing device to perform operations, including providing control commands (e.g. pulse width modulation commands) to the switching elements of the power converter 162 and other aspects of the wind turbine system 100.

In operation, alternating current power generated at the DFIG 120 by rotation of the rotor 106 is provided via a dual path to electrical grid 184. The dual paths are defined by the stator bus 154 and the rotor bus 156. On the rotor bus side 156, sinusoidal multi-phase (e.g. three-phase) alternating current (AC) power is provided to the power converter 162. The rotor side power converter 166 converts the AC power provided from the rotor bus 156 into direct current (DC) power and provides the DC power to the DC link 136. Switching elements (e.g. IGBTs) used in bridge circuits of the rotor side power converter 166 can be modulated to convert the AC power provided from the rotor bus 156 into DC power suitable for the DC link 136.

The line side converter 168 converts the DC power on the DC link 136 into AC output power suitable for the electrical grid 184, such as AC power synchronous to the electrical grid 184, which can be transformed by the transformer 178 before being provided to the electrical grid 184. In particular, switching elements (e.g. IGBTs) used in bridge circuits of the line side power converter 168 can be modulated to convert the DC power on the DC link 136 into AC power on the line side bus 188. The AC power from the power converter 162 can be combined with the power from the stator of DFIG 120 to provide multi-phase power (e.g. three-phase power) having a frequency maintained substantially at the frequency of the electrical grid 184 (e.g. 50 Hz/60 Hz).

The power converter 162 can receive control signals from, for instance, the control system 174. The control signals can be based, among other things, on sensed conditions or operating characteristics of the wind turbine system 100. Typically, the control signals provide for control of the operation of the power converter 162. For example, feedback in the form of sensed speed of the DFIG 120 can be used to control the conversion of the output power from the rotor bus 156 to maintain a proper and balanced multi-phase (e.g. three-phase) power supply. Other feedback from other sensors can also be used by the controller 174 to control the power converter 162, including, for example, stator and rotor bus voltages and current feedbacks. Using the various forms of feedback information, switching control signals (e.g. gate timing commands for IGBTs), stator synchronizing control signals, and circuit breaker signals can be generated.

Various circuit breakers and switches, such as a line bus breaker 186, stator bus breaker 158, and grid breaker 182 can be included in the system 100 to connect or disconnect corresponding buses, for example, when current flow is excessive and can damage components of the wind turbine system 100 or for other operational considerations. Additional protection components can also be included in the wind turbine system 100.

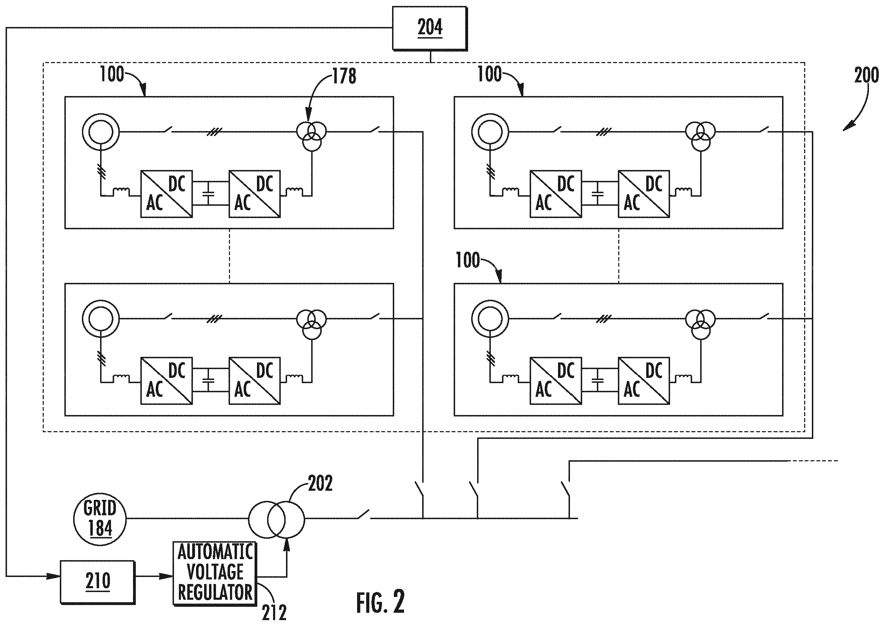

Referring now to FIG. 2, the wind turbines 100 may be arranged together in a common geographical location known as a wind farm 200 and connected to the power grid 184. More specifically, as shown, each of the wind turbines 100 may be connected to the power grid 184 via a main transformer 178. Further, as shown, the clusters 206 of wind turbines 100 in the wind farm 200 may be connected to the power grid 184 via a cluster or substation transformer 202. Thus, as shown, the wind farm 200 may also include a transformer controller 210 and/or an automatic voltage regulator 212 (e.g. a tap changer).

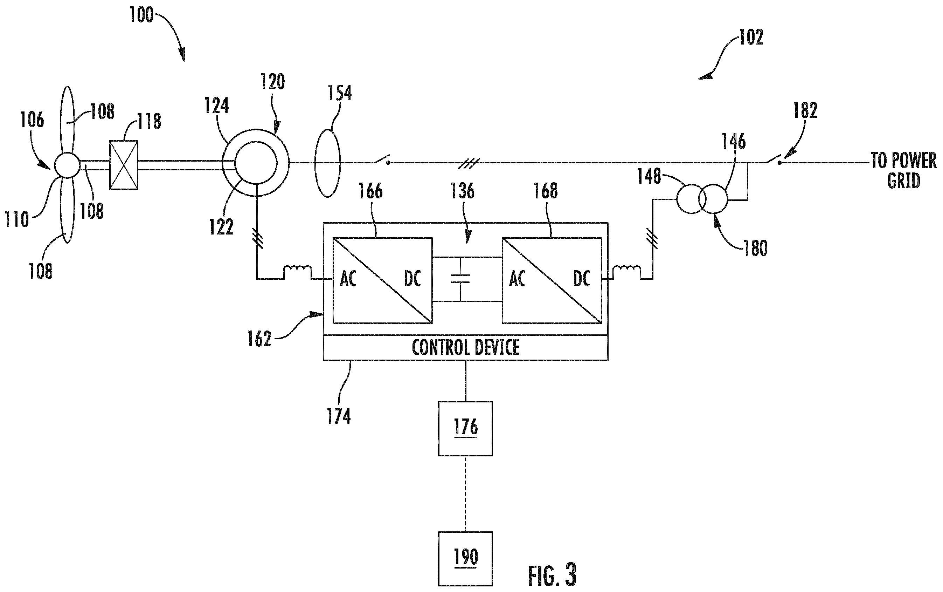

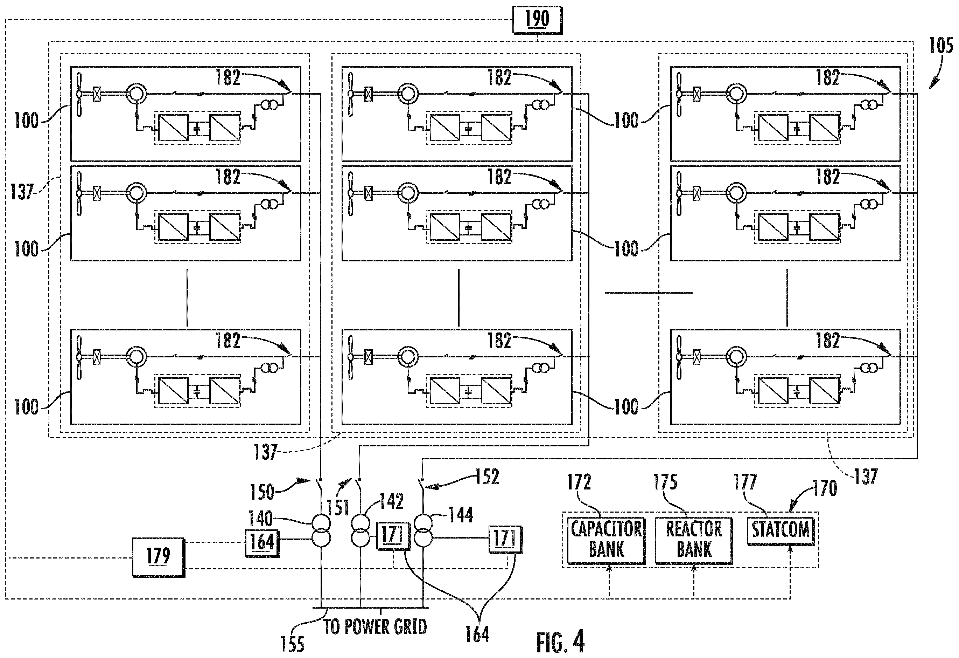

Referring now to FIGS. 3 and 4, an alternate implementation of a DFIG wind turbine system 100 according to additional example aspects of the present disclosure is illustrated. Elements that are the same or similar to those as in FIG. 1 are referred to with the same reference numerals. As shown, in some implementations, the stator 124 of the DFIG 120 can be coupled to the stator bus 154. Power from the power converter 162 can be combined with power from stator bus 154 and provided to a transformer 180. In some implementations, as shown, the transformer 180 can be a two-winding partial transformer. In some implementations, as shown in FIG. 4, a plurality of the DFIG wind turbine systems 100 illustrated in FIG. 3 may be arranged together in a common geographical location known as a wind farm 105. Further, as shown, the DFIG wind turbine systems 100 within the wind farm 105 can be coupled together in a cluster 137 and power from each of the respective clusters 137 of the wind turbine systems 100 can be provided to a cluster transformer 140, 142, 144, respectively, before power is provided to the power grid. More specifically, as shown, each of the clusters 137 may be connected to the separate transformer 140, 142, 144 via switches 150, 151, 152, respectively, for stepping up the voltage amplitude of the electrical power from each cluster 137 such that the transformed electrical power may be further transmitted to the power grid.

In contrast to conventional systems such as those illustrated in FIGS. 1 and 2, however, the partial power transformer 180 of FIGS. 3 and 4 is provided for stepping up the voltage amplitude of the electrical power from the power converter 122 such that the transformed electrical power may be further transmitted to the power grid. Thus, as shown, the illustrated system 102 does not include the conventional three-winding main transformer described above. Rather, as shown in the illustrated embodiment, the partial power transformer 180 may correspond to a two-winding transformer having a primary winding 146 connected to the power grid and a secondary winding 148 connected to the rotor side converter 168.

In addition, as shown, the transformers 140, 142, 144 may be connected to a main line 155 that combines the voltage from each cluster 137 before sending the power to the grid. Further, as mentioned, each of the clusters 137 may be communicatively coupled with a cluster-level controller 109 that controls each of the transformers 140, 142, 144. In addition, as shown, the wind farm 105 may include one or more automatic voltage regulators (e.g. tap changers 164) arranged with each of the transformers 140, 142, 144 and/or one or more reactive power devices 170. For example, as shown, the reactive power devices 170 may include any one of the following: a capacitor bank 172, a reactor bank 175, and/or a static synchronous compensator (STATCOM) 177.

In addition, as shown, the wind turbine systems 100 described herein may include one or more controllers. For example, the system 100 may include a farm-level controller 190, one or more cluster-level controllers 179, one or more turbine-level controllers 176 and/or one or more converter controllers 174. As such, the various controllers described herein are configured to control any of the components of the wind farm 105, the wind turbine clusters 137, and/or the individual wind turbines 100 and/or implement the method steps as described herein.

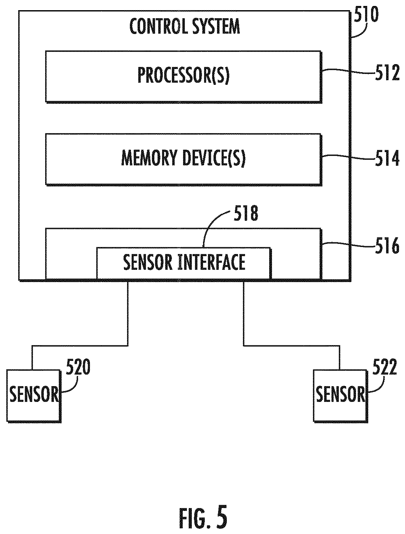

Referring now to FIG. 5, a block diagram of one embodiment of a control device/controller 510 according to example embodiments of the present disclosure is illustrated. As mentioned, the controller 510 can be, for example, the farm-level controller 190, one or more cluster-level controllers 179, one or more turbine-level controllers 176 and/or one or more converter controllers 174. As such, the controller 510 can include one or more control devices associated with aspects of a wind turbine system, such as one or more control devices configured to control a power converter 162. In some embodiments, the one or more control devices 510 can include one or more processor(s) 512 and one or more memory device(s) 514. The processor(s) 512 and memory device(s) 514 can be distributed so that they are located at one more locales or with different devices.

The processor(s) 512 and memory device(s) 514 can be configured to perform a variety of computer-implemented functions and/or instructions (e.g., performing the methods, steps, calculations and the like and storing relevant data as disclosed herein). The instructions when executed by the processor(s) 512 can cause the processor(s) 512 to perform operations according to example aspects of the present disclosure. For instance, the instructions when executed by the processor(s) 512 can cause the processor(s) 512 to implement the methods discussed herein.

Additionally, the control device 510 can include a communication interface 516 to facilitate communications between the control device 510 and various components of a wind turbine system, wind farm, or power system, including reactive power production requirements or sensed operating parameters as described herein. Further, the communication interface 518 can include a sensor interface 518 (e.g., one or more analog-to-digital converters) to permit signals transmitted from one or more sensors 520, 522 to be converted into signals that can be understood and processed by the processor(s) 512. It should be appreciated that the sensors (e.g. sensors 520, 522) can be communicatively coupled to the communications interface 518 using any suitable means, such as a wired or wireless connection. The signals can be communicated using any suitable communications protocol. The sensors (520, 522) can be, for example, voltage sensors, current sensors, power sensors, DFIG rotational speed sensors, temperature sensors, or any other sensor device described herein.

As such, the processor(s) 512 can be configured to receive one or more signals from the sensors 520, 522. For instance, in some embodiments, the processor(s) 512 can receive signals indicative of a voltage or current from the sensor 520. In some embodiments, the processor(s) 512 can receive signals indicative of temperature (e.g. DFIG temperature, line side converter temperature) from sensor 522.

As used herein, the term "processor" refers not only to integrated circuits referred to in the art as being included in a computer, but also refers to a control device, a microcontrol device, a microcomputer, a programmable logic control device (PLC), an application specific integrated circuit, and other programmable circuits. Additionally, the memory device(s) 514 can generally include memory element(s) including, but not limited to, computer readable medium (e.g., random access memory (RAM)), computer readable non-volatile medium (e.g., a flash memory), a compact disc-read only memory (CD-ROM), a magneto-optical disk (MOD), a digital versatile disc (DVD) and/or other suitable memory elements. Such memory device(s) 514 can generally be configured to store suitable computer-readable instructions that, when implemented by the processor(s) 512, configure the control device 510 to perform the various functions as described herein.

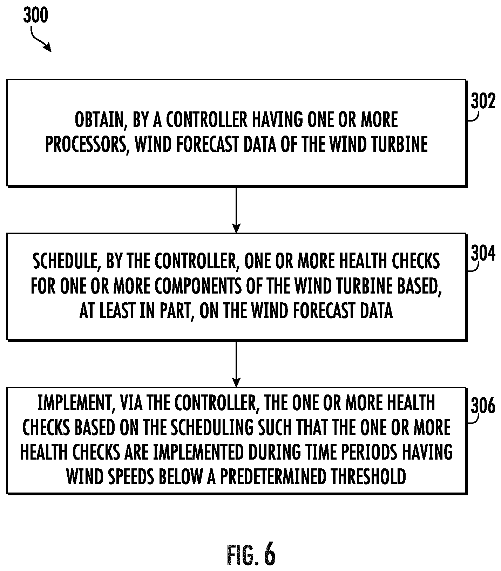

Referring now to FIG. 6, a flow diagram of one embodiment of a method 300 for improving power production of a wind turbine, such as the wind turbine system 100 described herein, is illustrated. The method 300 can be implemented by any suitable controller, such as any of those described herein. In addition, FIG. 6 depicts steps performed in a particular order for purposes of illustration and discussion. Those of ordinary skill in the art, using the disclosures provided herein, will understand that various steps of any of the methods disclosed herein can be adapted, omitted, rearranged, or expanded in various ways without deviating from the scope of the present disclosure.

As shown at 302, the method 300 can include obtaining wind forecast data of the wind turbine(s) 100 by the controller. For example, in an embodiment, the method 300 may include determining the wind forecast data of the wind turbine 100 for any suitable future time frame, such as at most five days in advance. In addition, it should be understood that the wind forecast data may include data corresponding to wind speed, wind turbulence, wind gusts, wind direction, wind acceleration, wind shear, wind veer, wake, or any other wind parameter. Further, the controller described herein can be operatively connected to one or more sensors, such as one or more wind sensors, and can be configured to receive measurements indicative of various wind conditions in the wind farm 200 that can be used to estimate the wind forecast data. Moreover, the step of obtaining the wind forecast data of the wind turbine 100 may further include calibrating estimated patterns of wind data with actual measured wind data and predicting the wind forecast data based on the calibrations.

Referring still to FIG. 6, as shown at 304, the method 300 includes scheduling, by the controller, one or more health checks for one or more components (including subcomponents) of the wind turbine 100 based, at least in part, on the wind forecast data. For example, in one embodiment, the health checks described herein may include various technical standby tests or health checks (e.g. as recommended by the IEC) which are executed during specific periods of time in order to ensure safe operation of wind turbine 100. For example, for certain wind turbines, certain technical standby (TS) tests may be conducted to check the health of the wind turbine subsystems by stopping the wind turbine. Moreover, in an embodiment, the wind forecast data may include, for example, wind speed or wind direction.

Thus, in certain embodiments, the controller may include an algorithm which optimizes the schedule of such health checks by utilizing wind forecast data to ensure the health checks occur during a low wind speed period. In certain instances, for example, the controller may utilize specialized software, such as edge computing, which generally refers to a distributed computing paradigm that brings computation and data storage closer to the location where it is needed to improve response times and save bandwidth. Accordingly, in an embodiment, the algorithm may optimize scheduling of the health check(s) based on the wind forecast data (e.g. by scheduling the health check(s) during periods of low or no wind), previous test data (e.g. by scheduling the health check(s) a predetermined time after a previous test has been completed successfully), a maximum power output of the wind farm 200, and/or a maximum power loss allowed per wind turbine in the wind farm 200. The method 300 also includes prioritizing the health check(s) for the plurality of wind turbines 100 in the wind farm 200 based on the wind forecast and/or previous test data. In another embodiment, the method 300 may include scheduling the health check(s) for determining the overall health of the wind turbine 100 automatically or manually.

Moreover, according to the invention, the method 300 may also include adjusting the scheduling based on changes in wind data that differs from the wind forecast data of the wind turbine system 100. For example, in certain instances, the algorithm may schedule for a better window of opportunity (e.g. less or no wind), if available, when the forecast wind speed changes. In additional embodiments, the method 300 may also include tracking the health check(s) and monitoring a time elapsed between health checks. Accordingly, the controller may consider the elapsed time between health check(s) when developing the schedule.

Referring back to FIG. 6, as shown at 306, the method 300 includes implementing, via the controller, the health check(s) based on the scheduling such that the health check(s) are implemented during time periods having wind speeds below a predetermined threshold. Accordingly, the optimization algorithm is configured to schedule the health check(s) by using weather forecast services to predict the wind speed. More specifically, in an embodiment, the method 300 may include evaluating improvement in the performance of the wind turbine 100 and/or wind farm 200 and visualizing the wind prediction and test scheduling status along with a strategy for algorithm accuracy measurement.

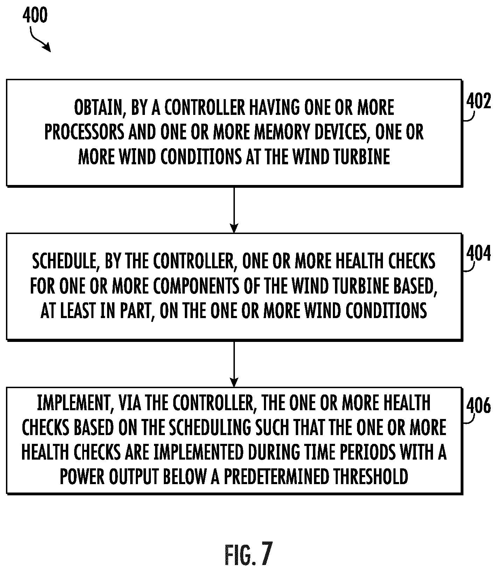

Referring now to FIG. 7, a flow diagram of one embodiment of a method 400 for improving power production of a wind turbine, such as the wind turbine system 100 described herein, is illustrated. The method 400 can be implemented by any suitable controller, such as any of those described herein. In addition, FIG. 7 depicts steps performed in a particular order for purposes of illustration and discussion. Those of ordinary skill in the art, using the disclosures provided herein, will understand that various steps of any of the methods disclosed herein can be adapted, omitted, rearranged, or expanded in various ways without deviating from the scope of the present disclosure.

As shown at 402, the method 400 can include obtaining one or more wind conditions at the wind turbine(s) 100 by the controller. For example, in an embodiment, the one or more wind conditions at the wind turbine(s) 100 may include data corresponding to wind speed, wind turbulence, wind gusts, wind direction, wind acceleration, wind shear, wind veer, wake, or any other wind parameter. Further, as mentioned, the controller described herein can be operatively connected to one or more sensors, such as one or more wind sensors, and can be configured to receive measurements indicative of various wind conditions in the wind farm 200.

As shown at 404, the method 400 may include scheduling, by the controller, one or more health checks for one or more components of the wind turbine 100 based, at least in part, on the one or more wind conditions. As shown at 406, the method 400 may include implementing, via the controller, the health check(s) based on the scheduling such that the health check(s) are implemented during time periods with a power output below a predetermined threshold.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Although specific features of various embodiments may be shown in some drawings and not in others, this is for convenience only.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. A method (300) for improving power production of a wind turbine (100), the method comprising:
obtaining, by a controller having one or more processors (512), wind forecast data of the wind turbine (100) (302);
scheduling, by the controller, one or more health checks for one or more components of the wind turbine (100) based, at least in part, on the wind forecast data (304); and,
implementing, via the controller, the one or more health checks based on the scheduling such that the one or more health checks are implemented during time periods having wind speeds below a predetermined threshold (306);
and wherein the wind turbine (100) is part of a wind farm (200) comprising a plurality of wind turbines; the method **characterised in that** it further comprises scheduling the one or more health checks based on the wind forecast data and at least one of previous test data and a periodic predetermined wind threshold based historical site data analysis;
and the method further comprising prioritizing the one or more health checks for the plurality of wind turbines (100) in the wind farm (200) based on at least one of the wind forecast or the previous test data;
the method further comprising adjusting the scheduling based on changes in wind data that differs from the wind forecast data of the wind turbine (100)

2. The method of claim 1, wherein the wind forecast data comprises online or time-series-based statistical wind forecast data, the wind forecast data comprising at least one of wind speed or wind direction.

3. The method of any of the preceding claims, further comprising scheduling the one or more health checks automatically.

4. The method of any of the preceding claims, further comprising adjusting the scheduling based on technician availability.

5. The method of claim 1, further comprising scheduling the one or more health checks based on the wind forecast data and at least one of a maximum power output of the wind farm (200) or a maximum power loss allowed per wind turbine (100) in the wind farm.

6. The method of any of the preceding claims, further comprising determining the wind forecast data of the wind turbine (100) for at most five days in advance.

7. The method of any of the preceding claims, further comprising tracking the one or more health checks and monitoring a time elapsed between health checks.

8. The method of any of the preceding claims, wherein obtaining the wind forecast data of the wind turbine further comprises calibrating estimated patterns of wind data with actual measured wind data.

9. A system (400) for improving power production of a wind farm (200) having a plurality of wind turbines, the system comprising:
a farm-level controller configured to perform a plurality of operations, the plurality of operations comprising:
obtaining a plurality of wind forecast data of the plurality of wind turbines (402);
determining a schedule for one or more health checks for one or more components of the plurality of wind turbines based, at least in part, on the one or more wind forecast data; and,
sending the schedule to turbine controllers of the plurality of wind turbines; and,
a plurality of turbine-level controllers communicatively coupled to the farm-level controller, each of the plurality of turbine-level controllers configured to perform a plurality of operations, the plurality of operations comprising:
implementing the one or more health checks based on the schedule such that the one or more health checks are implemented during time periods with a power output below a predetermined threshold (406);
the system **characterised in that** the farm-level controller is further adapted to carry out the operation of scheduling the one or more health checks based on the wind forecast data and at least one of previous test data and a periodic predetermined wind threshold based historical site data analysis;
wherein the plurality of operations of the farm-level controller further comprises prioritizing the one or more health checks for the plurality of wind turbines in the wind farm based on at least one of the wind forecast or
the previous test data; the farm-level controller further adapted to adjust the scheduling based on changes in wind data that differs from the wind forecast data of the wind turbine (100).

10. The system of claim 9, wherein the one or more wind forecast data comprises at least one of forecasted wind speed, forecasted wind direction, and/or combinations thereof.

11. The system of any of claims 9-10, wherein the plurality of operations of the farm-level controller further comprises scheduling the one or more health checks automatically.

## Patentansprüche

1. Verfahren (300) zur Verbesserung der Energieerzeugung einer Windkraftanlage (100), das Verfahren umfassend:
Erhalten, durch eine Steuerung mit einem oder mehreren Prozessoren (512), von Windvorhersagedaten der Windkraftanlage (100) (302);
Planen, durch die Steuerung, von einer oder mehreren Gesundheitsprüfungen für eine oder mehrere Komponenten der Windkraftanlage (100) basierend, zumindest teilweise, auf den Windvorhersagedaten (304); und,
Implementieren, über die Steuerung, der einen oder mehreren Gesundheitsprüfungen basierend auf der Planung, derart, dass die eine oder mehreren Gesundheitsprüfungen während Zeiträumen mit Windgeschwindigkeiten unter einem vorbestimmten Schwellenwert implementiert werden (306);
und wobei die Windkraftanlage (100) Teil eines Windparks (200) ist, der eine Vielzahl von Windkraftanlagen umfasst;
das Verfahren **dadurch gekennzeichnet, dass** es ferner umfasst:
Planen der einen oder mehreren Gesundheitsprüfungen basierend auf den Windvorhersagedaten und mindestens einem von vorherigen Testdaten und einer periodischen, vorbestimmten, windschwellenwertbasierten historischen Standortdatenanalyse;
und das Verfahren ferner umfassend das Priorisieren der einen oder mehreren Gesundheitsprüfungen für die Vielzahl von Windkraftanlagen (100) in dem Windpark (200) basierend auf mindestens einem der Windvorhersage oder der vorherigen Testdaten
das Verfahren ferner umfassend das Anpassen der Planung basierend auf Änderungen der Winddaten, die von den Windvorhersagedaten der Windkraftanlage (100) abweichen.

2. Verfahren nach Anspruch 1, wobei die Windvorhersagedaten Online- oder zeitreihenbasierte statistische Windvorhersagedaten umfassen, wobei die Windvorhersagedaten mindestens eines von Windgeschwindigkeit oder Windrichtung umfassen.

3. Verfahren nach einem der vorhergehenden Ansprüche, ferner umfassend das automatische Planen der einen oder mehreren Gesundheitsprüfungen.

4. Verfahren nach einem der vorhergehenden Ansprüche, ferner umfassend das Anpassen der Planung basierend auf der Verfügbarkeit von Technikern.

5. Verfahren nach Anspruch 1, ferner umfassend das Planen der einen oder mehreren Gesundheitsprüfungen basierend auf den Windvorhersagedaten und mindestens einem von einer maximalen Leistungsabgabe des Windparks (200) oder einem maximal zulässigen Leistungsverlust pro Windkraftanlage (100) in dem Windpark.

6. Verfahren nach einem der vorhergehenden Ansprüche, ferner umfassend das Bestimmen der Windvorhersagedaten der Windkraftanlage (100) für höchstens fünf Tage im Voraus.

7. Verfahren nach einem der vorhergehenden Ansprüche, ferner umfassend das Verfolgen der einen oder mehreren Gesundheitsprüfungen und das Überwachen einer zwischen den Gesundheitsprüfungen verstrichenen Zeit.

8. Verfahren nach einem der vorhergehenden Ansprüche, wobei das Erhalten der Windvorhersagedaten der Windkraftanlage ferner das Kalibrieren geschätzter Muster von Winddaten mit tatsächlich gemessenen Winddaten umfasst.

9. System (400) zur Verbesserung der Energieerzeugung eines Windparks (200) mit einer Vielzahl von Windkraftanlagen, das System umfassend:
eine Steuerung auf Parkebene, die dafür konfiguriert ist, eine Vielzahl von Operationen durchzuführen, wobei die Vielzahl von Operationen umfasst:
Erhalten einer Vielzahl von Windvorhersagedaten der Vielzahl von Windkraftanlagen (402);
Bestimmen eines Zeitplans für eine oder mehrere Gesundheitsprüfungen für eine oder mehrere Komponenten der Vielzahl von Windkraftanlagen basierend, zumindest teilweise, auf den einen oder mehreren Windvorhersagedaten; und,
Senden des Zeitplans an Anlagensteuerungen der Vielzahl von Windkraftanlagen; und,
eine Vielzahl von Steuerungen auf Anlagenebene, die kommunikativ mit der Steuerung auf Parkebene gekoppelt sind, wobei jede der Vielzahl von Steuerungen auf Anlagenebene dafür konfiguriert ist, eine Vielzahl von Operationen durchzuführen, wobei die Vielzahl von Operationen umfasst:
Implementieren der einen oder mehreren Gesundheitsprüfungen basierend auf dem Zeitplan, derart, dass die eine oder mehreren Gesundheitsprüfungen während Zeiträumen mit einer Leistungsabgabe unter einem vorbestimmten Schwellenwert implementiert werden (406);
das System **dadurch gekennzeichnet, dass** die Steuerung auf Parkebene ferner angepasst ist, um die Operation des Planens der einen oder mehreren Gesundheitsprüfungen basierend auf den Windvorhersagedaten und mindestens einem von vorherigen Testdaten und einer periodischen, vorbestimmten, windschwellenwertbasierten historischen Standortdatenanalyse auszuführen;
wobei die Vielzahl von Operationen der Steuerung auf Parkebene ferner das Priorisieren der einen oder mehreren Gesundheitsprüfungen für die Vielzahl von Windkraftanlagen in dem Windpark basierend auf mindestens einem der Windvorhersage oder der vorherigen Testdaten umfasst;
wobei die Steuerung auf Parkebene ferner angepasst ist, um die Planung basierend auf Änderungen der Winddaten, die von den Windvorhersagedaten der Windkraftanlage (100) abweichen, anzupassen.

10. System nach Anspruch 9, wobei die einen oder mehreren Windvorhersagedaten mindestens eines von vorhergesagter Windgeschwindigkeit, vorhergesagter Windrichtung und/oder Kombinationen davon umfassen.

11. System nach einem der Ansprüche 9-10, wobei die Vielzahl von Operationen der Steuerung auf Parkebene ferner das automatische Planen der einen oder mehreren Gesundheitsprüfungen umfasst.

## Revendications

1. Procédé (300) permettant d'améliorer une production d'énergie d'une éolienne (100), le procédé comprenant :
l'obtention, par un dispositif de commande ayant un ou plusieurs processeurs (512), de données de prévision de vent de l'éolienne (100) (302) ;
la planification, par le dispositif de commande, d'une ou plusieurs vérifications de l'état pour un ou plusieurs composants de l'éolienne (100) en fonction, au moins en partie, des données de prévision de vent (304) ; et,
la mise en œuvre, par l'intermédiaire du dispositif de commande, du ou des contrôles d'état sur la base de la planification, de telle sorte que le ou les contrôles d'état sont mis en œuvre pendant des périodes de temps ayant des vitesses du vent inférieures à un seuil prédéterminé (306) ;
et dans lequel l'éolienne (100) est un seau d'un parc éolien (200) comprenant une pluralité de éoliennes ;
le procédé **étant caractérisé en ce qu'**il comprend outre la programmation du ou des contrôles d'état sur la base des données de prévision de vent et d'au moins l'une des données d'essai précédentes et d'une analyse périodique de données historiques de site sur la base d'un seuil de vent prédéterminé ;
et le procédé comprenant en outre le classement par ordre de priorité du ou des contrôles de santé pour la pluralité d'éoliennes (100) dans le parc éolien (200) en fonction d'au moins l'une parmi les prévisions de vent ou les données de test précédentes ;
le procédé comprenant en outre l'ajustement de la planification sur la base de changements de données de vent qui diffèrent des données de prévision de vent de l'éolienne (100)

2. Procédé selon la revendication 1, dans lequel les données de prévision de vent comprennent des données statistiques de prévision de vent en ligne ou basées sur des séries chronologiques, les données de prévision de vent comprenant au moins l'une de la vitesse ou de la direction du vent.

3. Procédé selon l'une quelconque des revendications précédentes, comprenant en outre la programmation automatique du ou des contrôles d'état.

4. Procédé selon l'une quelconque des revendications précédentes, comprenant en outre l'ajustement de la planification sur la base de la disponibilité du technicien.

5. Procédé selon la revendication 1, comprenant en outre la programmation du ou des contrôles d'état en fonction des données de prévision de vent et d'au moins l'une parmi une sortie d'énergie maximale du parc éolien (200) ou une perte d'énergie maximale autorisée par éolienne (100) dans le parc éolien.

6. Procédé selon l'une quelconque des revendications précédentes, comprenant en outre la détermination des données de prévision de vent de l'éolienne (100) pour au plus cinq jours à l'avance.

7. Procédé selon l'une quelconque des revendications précédentes, comprenant en outre le suivi du ou des contrôles de l'état et la surveillance du temps écoulé entre les vérifications de l'état.

8. Procédé selon l'une quelconque des revendications précédentes, dans lequel l'obtention des données prévisionnelles du vent de l'éolienne comprend en outre l'étalonnage des modèles estimés de données de vent avec les données de vent réelles mesurées.

9. Système (400) pour l'amélioration d'une production d'énergie d'un parc éolien (200) ayant une pluralité d'éoliennes, le système comprenant :
un dispositif de commande au niveau du parc configuré pour effectuer une pluralité de fonctionnements, la pluralité de fonctionnements comprenant :
l'obtention d'une pluralité de données de prévision de vent de la pluralité d'éoliennes (402) ;
la détermination d'une planification pour une ou plusieurs vérifications de l'état pour un ou plusieurs composants de la pluralité d'éoliennes sur la base, au moins en partie, de la ou des données de prévision de vent ; et,
l'envoi de la planification aux dispositifs de commande de turbine de la pluralité de turbines éoliennes ; et,
une pluralité de dispositifs de commande au niveau de la turbine couplés en communication au dispositif de commande au niveau du parc, chacun de la pluralité de dispositifs de commande au niveau de la turbine étant configuré pour effectuer une pluralité d'opérations, la pluralité d'opérations comprenant :
la mise en œuvre du ou des contrôles d'état en fonction du calendrier de telle sorte que le ou les contrôles d'état sont mis en œuvre pendant des périodes de temps avec une énergie de sortie inférieure à un seuil prédéterminé (406) ;
le système **étant caractérisé en ce que** le dispositif de commande au niveau du parc est en outre adapté pour annuler l'opération consistant à programmer le ou les contrôles de santé sur la base des données de prévision de vent et au moins l'une des données d'essai précédentes et d'une analyse périodique de données historiques de site basée sur un seuil de vent prédéterminé ;
dans lequel la pluralité d'opérations du dispositif de commande au niveau parc comprend en outre le classement par ordre de priorité du ou des contrôles de santé pour la pluralité d'éoliennes dans le parc éolien sur la base d'au moins l'une parmi les prévisions de vent ou les données d'essai précédentes ;
le dispositif de commande au niveau du parc étant adapté en outre pour ajuster la planification en fonction de changements de données de vent qui diffèrent des données de prévision de vent de l'éolienne (100).

10. Système selon la revendication 9, dans lequel la ou les données de prévision de vent comprennent au moins l'une parmi la vitesse du vent prévue, la direction du vent prévue et/ou des combinaisons de celles-ci.

11. Système selon l'une quelconque des revendications 9 à 10, dans lequel la pluralité d'opérations du dispositif de commande au niveau de la batterie comprend en outre la programmation automatique du ou des contrôles d'état.
